# EUROPÄISCHE PATENTSCHRIFT

(11) **EP 3 118 592 B1**
(45) Veröffentlichungstag und Bekanntmachung des Hinweises auf die Patenterteilung: **20.03.2024**
(21) Anmeldenummer: 16174783.7
(22) Anmeldetag: 16.06.2016
(51) Int. Cl.: G01F 1/84, G01F 25/10

(54) **VERFAHREN ZUM BETREIBEN EINES CORIOLIS-MASSEDURCHFLUSSMESSGERÄTS UND DIESBEZÜGLICHES CORIOLIS-MASSEDURCHFLUSSMESSGERÄT**
METHOD FOR OPERATING A CORIOLIS MASS FLOW METER AND RELATED CORIOLIS MASS FLOW METER
PROCEDE DE FONCTIONNEMENT D'UN APPAREIL DE MESURE DU DEBIT MASSIQUE CORIOLIS ET APPAREIL DE MESURE DU DEBIT MASSIQUE CORIOLIS CORRESPONDANT

(30) Priorität: 17.07.2015 DE 102015111686
(43) Veröffentlichungstag der Anmeldung: 18.01.2017
(73) Patentinhaber: Krohne Messtechnik GmbH, 47058 Duisburg (DE)
(72) Erfinder: Erkelenz, Alexander, 47447 Moers (DE); Storm, Ralf, 45131 Essen (DE)
(74) Vertreter: Gesthuysen Patentanwälte

(56) Entgegenhaltungen:
- DE-A1-102011 100 092
- DE-B3-102013 021 136
- US-A- 5 469 748
- US-A1- 2007 186 683

## Beschreibung

Die Erfindung betrifft ein Verfahren zum Betreiben eines Coriolis-Massedurchflussmessgeräts mit mindestens einem Messrohr, einer Schwingungserregungseinrichtung zur Erregung einer Schwingung des Messrohrs, mindestens einem ersten Schwingungssensor und einem zweiten Schwingungssensor und mindestens einem ersten Sensorsignalpfad und einem zweiten Sensorsignalpfad. Für gewöhnlich weist das Coriolis-Massedurchflussmessgerät auch eine Auswertungseinrichtung auf.

Das Funktionsprinzip des Coriolis-Massedurchflussmessgeräts ist, dass das von einem Medium durchströmte Messrohr zu einer Schwingung angeregt wird, wobei die Schwingungsrichtung des Messrohrs und damit auch des im Messrohr strömenden Mediums zumindest eine zur Strömungsrichtung des Mediums im Messrohr orthogonale Komponente aufweist. Die orthogonale Komponente der Schwingung des im Messrohr strömenden Mediums ruft in dem strömenden Medium eine Coriolisträgheitskraft hervor, die der orthogonalen Komponente der Schwingung entgegen wirkt. Die Coriolisträgheitskraft verursacht, dass zwischen der Schwingung des Messrohrs an jeweils zwei verschiedenen Messrohrstellen entlang der Längsachse des Messrohrs eine Phasendifferenz auftritt, die proportional zum Massestrom des Mediums durch das Messrohr ist. Das Coriolis-Massedurchflussmessgerät misst die Phasendifferenz und bestimmt aus dieser den Massestrom des Mediums.

Jeder Schwingungssensor ist an einer Messrohrstelle angeordnet, weist einen ersten Sensoranschluss und einen zweiten Sensoranschluss auf und ist zur Ausgabe eines die Schwingung an der Messrohrstelle wiedergebenden Sensorsignals zwischen dem ersten Sensoranschluss und dem zweiten Sensoranschluss ausgebildet. Die Messrohrstellen weisen zueinander entlang der Längsachse des Messrohrs Abstände auf. An jeder Messrohrstelle kann auch mehr als einer der Schwingungssensoren angeordnet sein, wobei die an einer der Messrohrstellen angeordneten Schwingungssensoren als ein einziger Schwingungssensor betrachtet werden. Das Sensorsignal ist ein analoges elektrisches Signal, welches zwischen dem ersten Sensoranschluss und dem zweiten Sensoranschluss anliegt, und wobei die Amplitude des Sensorsignals die Amplitude der Schwingung und die Phase des Sensorsignals die Phase der Schwingung an der Messrohrstelle wiedergibt.

Die Auswertungseinrichtung weist eine Digitalisierungseinrichtung mit mindestens einem ersten Digitalisierungskanal und einem zweiten Digitalisierungskanal auf. Dabei weist jeder der Digitalisierungskanäle mindestens einen ersten Analogsignaleingang auf. Die Digitalisierungseinrichtung digitalisiert die zu bestimmten Zeitpunkten an den Digitalisierungskanälen anliegenden analogen Signale. Die Zeitpunkte werden zumeist von der Auswertungseinrichtung bestimmt. Die Digitalisierungseinrichtung weist zur Digitalisierung für gewöhnlich mindestens einen Analog-Digital-Umsetzer auf. Ein Analog-Digital-Umsetzer setzt die Amplitude eines zu einem bestimmten Zeitpunkt an einem seiner Signaleingänge anliegenden analogen elektrischen Signals in ein der Amplitude entsprechendes Datum um.

Jeder der Sensorsignalpfade weist einen Ausgangssignalpfad und einen Eingangssignalpfad auf. Der Anfang eines jeden der Ausgangssignalpfade liegt in der Auswertungseinrichtung und das Ende eines jeden der Ausgangssignalpfade ist jeweils mit dem ersten Sensoranschluss von einem der Schwingungssensoren verbunden. Der Anfang eines jeden der Eingangssignalpfade ist jeweils mit dem zweiten Sensoranschluss von einem der Schwingungssensoren und das Ende eines jeden der Eingangssignalpfade ist jeweils mit dem ersten Analogsignaleingang von einem der Digitalisierungskanäle verbunden.

Der Anfang eines jeden der Sensorsignalpfade fällt mit dem Anfang des jeweiligen Ausgangssignalpfads und das Ende eines jeden der Sensorsignalpfade fällt mit dem Ende des jeweiligen Eingangssignalpfads zusammen. Demnach umfasst jeder der Sensorsignalpfade auch den Signalpfad zwischen dem ersten Sensoranschluss und dem zweiten Sensoranschluss des jeweiligen Schwingungssensors.

Das Sensorsignal des ersten Schwingungssensors breitet sich in Richtung auf den ersten Analogsignaleingang des ersten Digitalisierungskanals der Digitalisierungseinrichtung vom zweiten Sensoranschluss des ersten Schwingungssensors über den ersten Eingangssignalpfad aus. Entsprechend breitet sich das Sensorsignal des zweiten Schwingungssensors in Richtung auf den ersten Analogsignaleingang des zweiten Digitalisierungskanals vom zweiten Sensoranschluss des zweiten Schwingungssensors über den zweiten Eingangssignalpfad aus.

Die Auswertungseinrichtung ist zur Bestimmung des Massestroms eines durch das Messrohr strömenden Mediums aus der durch die Strömung des Mediums verursachten Phasendifferenz zwischen mindestens dem Sensorsignal des ersten Schwingungssensors und dem Sensorsignal des zweiten Schwingungssensors ausgebildet. Die Digitalisierungseinrichtung digitalisiert die analogen Sensorsignale, so dass sie als digitale Sensorsignale der Auswertungseinrichtung zur weiteren Verarbeitung vorliegen. Die Auswertungseinrichtung bestimmt üblicherweise die Phasendifferenz aus den digitalen Sensorsignalen. Die Phasendifferenz zwischen zwei Signalen gleicher Frequenz korrespondiert mit einer Zeitdifferenz des Auftretens einer beliebig bestimmten gleichen Amplitude der beiden Signale. Insbesondere ist zur Bestimmung der Zeitdifferenz die Amplitude der Signale geeignet, bei der die Signale ihre größte Steilheit aufweisen. Bei bipolaren symmetrischen harmonischen Signalen ist das der Nulldurchgang.

Die Sensorsignallaufzeiten in den Sensorsignalpfaden unterscheiden sich. Die zeitliche Differenz zwischen den Sensorsignallaufzeiten in jeweils zwei der Sensorsignalpfade wird als Sensorsignallaufzeitdifferenz bezeichnet. Eine Sensorsignallaufzeitdifferenz ist nicht von der mit einer Phasendifferenz korrespondieren Zeitdifferenz zu unterscheiden, weshalb Sensorsignallaufzeitdifferenzen die Genauigkeit der gattungsgemäßen Coriolis-Massedurchflussmessgeräte beeinträchtigen. Sensorsignallaufzeitdifferenzen treten insbesondere bei unterschiedlich langen Sensorsignalpfaden auf. Unterschiedlich lange Sensorsignalpfade ergeben sich zum Beispiel dann, wenn die Auswertungseinrichtung die Phasendifferenz bestimmt und die Auswertungseinrichtung und die Schwingungssensoren separate Einrichtungen sind und die Abstände zwischen den Schwingungssensoren und der Auswerteeinrichtung verschieden voneinander sind.

Um die Sensorsignallaufzeit zwischen dem ersten Sensorsignal und dem zweiten Sensorsignal zu kompensieren, ist aus dem Stand der Technik ein Verfahren mit den folgenden Verfahrensschritten bekannt: In einem ersten Verfahrensschritt wird mindestens ein erstes Testsignal mit mindestens einer ersten Testsignalfrequenz erzeugt. In einem zweiten Verfahrensschritt wird das mindestens erste Testsignal mindestens in den ersten Sensorsignalpfad und in den zweiten Sensorsignalpfad eingespeist. In einem dritten Verfahrensschritt wird das mindestens erste Testsignal von dem ersten Sensorsignalpfad über den ersten Schwingungssensor und von dem zweiten Sensorsignalpfad über den zweiten Schwingungssensor geführt. In einem vierten Verfahrensschritt wird die Testsignallaufzeitdifferenz des mindestens ersten Testsignals mindestens zwischen dem ersten Sensorsignalpfad und dem zweiten Sensorsignalpfad bestimmt. Und in einem fünften Verfahrensschritt wird mit der Testsignallaufzeitdifferenz die Sensorsignallaufzeitdifferenz zwischen dem ersten Sensorsignal und dem zweiten Sensorsignal kompensiert.

Das Testsignal wird mindestens in den ersten und in den zweiten Sensorsignalpfad eingespeist, wobei in den Sensorsignalpfaden die Schwingungssensoren liegen. Es breitet sich nach dem Einspeisen in den Sensorsignalpfaden aus, wobei die Testsignallaufzeiten in den Sensorsignalpfaden aufgrund von Unterschieden zwischen den Sensorsignalpfaden verschieden sein können. Die zeitliche Differenz zwischen den Testsignallaufzeiten in jeweils zwei der Sensorsignalpfade wird als Testsignallaufzeitdifferenz bezeichnet.

Die Sensorsignallaufzeitdifferenz wird zum Beispiel kompensiert oder zumindest vermindert, indem von zwei Sensorsignalen, die sich auf jeweils einem Sensorsignalpfad ausbreiten, das Sensorsignal, welches sich auf dem Sensorsignalpfad ausbreitet, der die geringere Testsignallaufzeit von den beiden Sensorsignalpfaden aufweist, verzögert wird. Das Maß für die Verzögerung ist dabei die Testsignallaufzeitdifferenz des Testsignals auf den beiden Sensorsignalpfaden.

Das Verfahren bewirkt eine hohe Messgenauigkeit des Coriolis-Massedurchflussmessgeräts. Die hohe Messgenauigkeit wird dadurch erreicht, dass die Phasendifferenz zwischen dem Sensorsignal des ersten Schwingungssensors und dem Sensorsignal des zweiten Schwingungssensors jedenfalls nur in einem geringen Maße durch die Sensorsignallaufzeitdifferenz zwischen dem Sensorsignal des ersten Schwingungssensors und dem Sensorsignal des zweiten Schwingungssensors beeinträchtigt wird. Insbesondere ermöglicht das Verfahren, nach einer Kalibrierung auftretende Sensorsignallaufzeitdifferenzen, wie sie zum Beispiel durch die Installation eines Coriolis-Massedurchflussmessgeräts am Einsatzort mit unterschiedlich langen Sensorsignalpfaden auftreten, zu kompensieren.

Die Auswertung von Signalen ist grundsätzlich vereinfacht, wenn die Signale voneinander verschiedene Frequenzspektren aufweisen. Denn dann können die Signale anhand ihrer Frequenzspektren identifiziert und unterschieden werden. Daher ist in dem Verfahren weiter vorgesehen, dass mindestens das erste Testsignal mit einem Frequenzspektrum erzeugt wird, das frei von der Frequenz der Schwingung des Messrohrs ist. Demnach ist das Frequenzspektrum der Sensorsignale verschieden von dem Frequenzspektrum des mindestens ersten Testsignals.

Das Übertragungsverhalten von Signalpfaden ist grundsätzlich abhängig von dem Frequenzspektrum des zu übertragenden Signals. Die Abhängigkeit hat zur Folge, dass die Signallaufzeit eines ersten Signals mit einem ersten Frequenzspektrum über einen Signalpfad verschieden ist von der Signallaufzeit eines zweiten Signals über den Signalpfad mit einem von dem Frequenzspektrum des ersten Signals verschiedenen Frequenzspektrum.

Die DE 10 2013 021 136 B3 offenbart ein Verfahren für Coriolis-Massedurchflussmessgeräte zur Korrektur von Nutzsignalen, sodass durch Signallaufzeitdifferenzen hervorgerufene Messfehler ursachenunabhängig vermieden werden. Die US 5,469,748 A offenbart ein Coriolis-Massedurchflussmessgerät mit einem Messrohr. Darüber hinaus weist das Coriolis-Massedurchflussmessgerät eine Schwingungserregungseinrichtung, zur Erregung einer Schwingung, einen ersten Schwingungssensor, einen zweiten Schwingungssensor, eine Auswertungseinrichtung, einen ersten Sensorsignalpfad und einen zweiten Signalpfad auf. Die DE 10 2011 100 092 A1 offenbart ein Verfahren zum Betreiben eines Coriolis-Massedurchflussmessgeräts und ein Coriolis-Massedurchflussmessgerät. Das Verfahren dient dabei zur Erfassung von relevanten Messgrößen oder Diagnoseparametern. Die US 2007/0186683 A1 schließlich offenbart ein gattungsgemäßes Verfahren zum Betreiben eines Coriolis-Massedurchflussmessgeräts.

Aufgabe der vorliegenden Erfindung ist daher zumindest eine Verringerung einer Wirkung der Abhängigkeit des Übertragungsverhaltens der Signalpfade vom Frequenzspektrum.

Die Aufgabe wird durch ein Verfahren mit den Merkmalen von Anspruch 1 gelöst. Das erfindungsgemäße Verfahren ist dadurch gekennzeichnet, dass mindestens das erste Testsignal mit einem Frequenzspektrum erzeugt wird, das unterhalb der Frequenz der Schwingung des Messrohrs liegt und mindestens ein zweites Testsignal mit einem Frequenzspektrum erzeugt wird, das oberhalb der Frequenz der Schwingung des Messrohrs liegt. Jedes der Frequenzspektren kann dabei eine einzige Frequenz oder auch eine beliebige Anzahl an Frequenzen beinhalten.

Dadurch, dass das Frequenzspektrum des mindestens ersten Testsignals unterhalb der Frequenz der Schwingung des Messrohrs und das Frequenzspektrum des mindestens zweiten Testsignals oberhalb der Frequenz der Schwingung des Messrohrs liegt und die Testsignallaufzeitdifferenz unter Verwendung sowohl des ersten Testsignals als auch des zweiten Testsignals bestimmt wird, wird die Wirkung der Abhängigkeit des Übertragungsverhaltens der Signalpfade zumindest verringert.

In einer Ausgestaltung des erfindungsgemäßen Verfahrens ist vorgesehen, dass bei der Kompensation der Sensorsignallaufzeitdifferenz die Frequenzabhängigkeit des Übertragungsverhaltens mindestens des ersten Sensorsignalpfads berücksichtigt wird. Die Berücksichtigung der Abhängigkeit des Übertragungsverhaltens eines Signalpfads von dem Frequenzspektrum des zu übertragenden Testsignals verbessert demnach die Kompensation der Sensorsignallaufzeitdifferenz.

Vorzugsweise ist vorgesehen, dass mindestens aus der Testsignallaufzeitdifferenz des ersten Testsignals und aus der Testsignallaufzeitdifferenz des zweiten Testsignals die Sensorsignallaufzeitdifferenz durch Interpolation bestimmt wird. Durch Interpolation wird die Sensorsignallaufzeitdifferenz genauer bestimmt als zuvor, wodurch die Kompensation der Sensorsignallaufzeitdifferenz verbessert ist.

Bei einer weiteren Ausgestaltung ist vorgesehen, dass mindestens aus der Testsignallaufzeitdifferenz des ersten Testsignals und aus der Testsignallaufzeitdifferenz des zweiten Testsignals die Übertragungsfunktion des ersten Signalpfads bestimmt wird. Die Übertragungsfunktion eines Signalpfads beschreibt das Übertragungsverhalten des Signalpfads insbesondere als Funktion der Frequenz. Die Parameter einer Übertragungsfunktion werden zum Beispiel aus den Testsignallaufzeitdifferenzen unter Berücksichtigung der Frequenzspektren der Testsignale bestimmt. Durch die Bestimmung der Übertragungsfunktion mindestens des ersten Signalpfads wird die Sensorsignallaufzeitdifferenz genauer bestimmt als zuvor, wodurch die Kompensation der Sensorsignallaufzeitdifferenz verbessert ist.

Die Signalpfade, das sind insbesondere die Ausgangssignalpfade, die Eingangssignalpfade und die Signalpfade zwischen jeweils dem ersten Sensoranschluss und dem zweiten Sensoranschluss eines der Schwingungssensoren, sind für gewöhnlich durch elektrische Leiter realisiert. Eine galvanische Trennung in einem elektrischen Leiter zum Beispiel durch einen Übertrager unterbricht den Signalpfad nicht.

Im Einzelnen gibt es nun eine Vielzahl von Möglichkeiten, das erfindungsgemäße Verfahren auszugestalten und weiterzubilden. Dazu wird verwiesen auf die dem Patentanspruch 1 nachgeordneten Patentansprüche. Weiter wird auf die nachfolgende Beschreibung von Ausführungsbeispielen in Verbindung mit der Zeichnung. In der Zeichnung zeigen
- Fig. 1: ein erstes Ausführungsbeispiel eines Coriolis-Massedurchflussmessgeräts,
- Fig. 2: einen Ablaufplan eines Ausführungsbeispiels eines Verfahrens.
- Fig. 3: ein auf dem ersten Ausführungsbeispiel aufbauendes zweites Ausführungsbeispiel eines Coriolis-Massedurchflussmessgeräts und
- Fig. 4: ein auf dem zweiten Ausführungsbeispiel aufbauendes drittes Ausführungsbeispiel eines Coriolis-Massedurchflussmessgeräts.

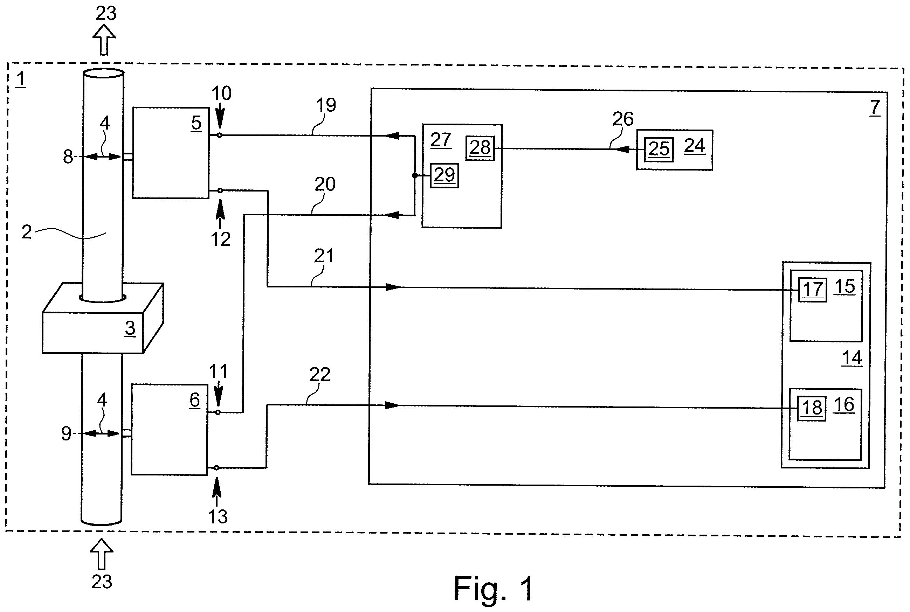

Fig. 1 zeigt schematisch ein erstes Ausführungsbeispiel eines Coriolis-Massedurchflussmessgeräts 1. Das Coriolis-Massedurchflussmessgerät 1 weist ein Messrohr 2, eine Schwingungserregungseinrichtung 3 zur Erregung einer Schwingung 4 des Messrohrs 2, einen ersten Schwingungssensor 5, einen zweiten Schwingungssensor 6, eine Auswertungseinrichtung 7, einen ersten Sensorsignalpfad und zweiten Sensorsignalpfad auf.

Der erste Schwingungssensor 5 ist an einer ersten Messrohrstelle 8 und der zweite Schwingungssensor 6 ist an einer zweiten Messrohrstelle 9 angeordnet. Der erste Schwingungssensor 5 weist einen ersten Sensoranschluss 10 und der zweite Schwingungssensor 6 weist ebenfalls einen ersten Sensoranschluss 11 auf. Der erste Schwingungssensor 5 weist auch einen zweiten Sensoranschluss 12 und der zweite Schwingungssensor 6 weist ebenfalls auch einen zweiten Sensoranschluss 13 auf. Der erste Schwingungssensor 5 ist zur Ausgabe eines die Schwingung 4 an der ersten Messrohrstelle 8 wiedergebenden analogen Sensorsignals zwischen seinem ersten Sensoranschluss 10 und zweiten Sensoranschluss 12 ausgebildet. Entsprechend ist der zweite Schwingungssensor 6 zur Ausgabe eines die Schwingung 4 an der zweiten Messrohrstelle 9 wiedergebenden analogen Sensorsignals zwischen seinem ersten Sensoranschluss 11 und zweiten Sensoranschluss 13 ausgebildet.

Die Auswertungseinrichtung 7 weist eine Digitalisierungseinrichtung 14 mit einem ersten Digitalisierungskanal 15 und einem zweiten Digitalisierungskanal 16 auf. Der erste Digitalisierungskanal 15 weist einen ersten Analogsignaleingang 17 und der zweite Digitalisierungskanal 16 weist ebenfalls einen ersten Analogsignaleingang 18 auf.

Der erste Sensorsignalpfad umfasst einen ersten Ausgangssignalpfad 19, wobei der Anfang in der Auswertungseinrichtung 7 liegt und das Ende mit dem ersten Sensoranschluss 10 des ersten Schwingungssensors 5 verbunden ist. Entsprechend umfasst der zweite Sensorsignalpfad einen zweiten Ausgangssignalpfad 20, wobei der Anfang ebenfalls in der Auswertungseinrichtung 7 liegt und das Ende mit dem ersten Sensoranschluss 11 des zweiten Schwingungssensors 6 verbunden ist.

Der erste Sensorsignalpfad umfasst weiter einen ersten Eingangssignalpfad 21. Der Anfang des ersten Eingangssignalpfads 21 ist mit dem zweiten Sensoranschluss 12 des ersten Schwingungssensors 5 und das Ende des ersten Eingangssignalpfads 21 ist mit dem ersten Analogsignaleingang 17 des ersten Digitalisierungskanals 15 verbunden. Der Anfang des ersten Sensorsignalpfads fällt mit dem Anfang des ersten Ausgangssignalpfads 19 und das Ende des ersten Sensorsignalpfads fällt mit dem Ende des ersten Eingangssignalpfads 21 zusammen.

Entsprechend umfasst der zweite Sensorsignalpfad einen zweiten Eingangssignalpfad 22. Der Anfang des zweiten Eingangssignalpfads 22 ist mit dem zweiten Sensoranschluss 13 des zweiten Schwingungssensors 6 und das Ende des zweiten Eingangssignalpfads 22 ist mit dem ersten Analogsignaleingang 18 des zweiten Digitalisierungskanals 16 verbunden. Der Anfang des zweiten Sensorsignalpfads fällt mit dem Anfang des zweiten Ausgangssignalpfads 20 und das Ende des zweiten Sensorsignalpfads fällt mit dem Ende des zweiten Eingangssignalpfads 22 zusammen.

Die Auswertungseinrichtung 7 ist ausgebildet, den Massestrom eines durch das Messrohr 2 strömenden Mediums 23 aus der durch das Medium 23 verursachten Phasendifferenz zwischen dem Sensorsignal des ersten Schwingungssensors 5 und dem Sensorsignal des zweiten Schwingungssensors 6 zu bestimmen.

Darüber hinaus weist die Auswertungseinrichtung 7 einen Testsignalgenerator 24 mit einem Testsignalausgang 25, einen Testsignalpfad 26 und eine Signalverbindungseinrichtung 27 mit einem ersten Signalverbindungseingang 28 und einem Signalverbindungsausgang 29 auf. Der Testsignalgenerator 24 ist ausgebildet, ein erstes Testsignal mit einer ersten Testsignalfrequenz zu erzeugen. Der Testsignalpfad 26 ist mit dem Testsignalausgang 25 und mit dem ersten Signalverbindungseingang 28 der Signalverbindungseinrichtung 27 verbunden. Der Signalverbindungsausgang 29 ist sowohl mit dem Anfang des ersten Ausgangssignalpfads 19 als auch mit dem Anfang des zweiten Ausgangssignalpfads 20 verbunden.

Die Auswertungseinrichtung 7 ist ausgebildet, die Testsignallaufzeitdifferenz des ersten Testsignals zwischen dem ersten Sensorsignalpfad und dem zweiten Sensorsignalpfad zu bestimmen und mit der Testsignallaufzeitdifferenz die Sensorsignallaufzeitdifferenz zwischen dem Sensorsignal des ersten Schwingungssensors 5 und dem Sensorsignal des zweiten Schwingungssensors 6 zu kompensieren. Dazu führt die Auswertungseinrichtung 7 das folgende Ausführungsbeispiel des Verfahrens aus.

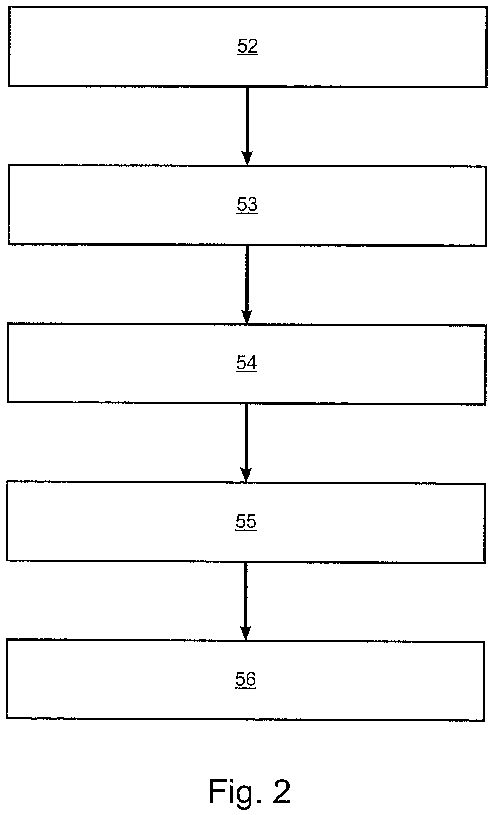

Fig. 2 zeigt einen Ablaufplan des Ausführungsbeispiels des Verfahrens. Das Verfahren umfasst fünf Verfahrensschritte: In einem ersten Verfahrensschritt 52 wird mindestens ein erstes Testsignal mit mindestens einer ersten Testsignalfrequenz erzeugt. In einem zweiten Verfahrensschritt 53 wird das mindestens erste Testsignal mindestens in den ersten Sensorsignalpfad und in den zweiten Sensorsignalpfad eingespeist. In einem dritten Verfahrensschritt 54 wird das mindestens erste Testsignal von dem ersten Sensorsignalpfad über den ersten Schwingungssensor und von dem zweiten Sensorsignalpfad über den zweiten Schwingungssensor geführt. In einem vierten Verfahrensschritt 55 wird die Testsignallaufzeitdifferenz des mindestens ersten Testsignals mindestens zwischen dem ersten Sensorsignalpfad und dem zweiten Sensorsignalpfad bestimmt. Und in einem fünften Verfahrensschritt 56 wird mit der Testsignallaufzeitdifferenz die Sensorsignallaufzeitdifferenz zwischen dem ersten Sensorsignal und dem zweiten Sensorsignal kompensiert.

Die Sensorsignallaufzeitdifferenz wird kompensiert, indem von den zwei Sensorsignalen, die sich auf jeweils einem der Sensorsignalpfade ausbreiten, das Sensorsignal, welches sich auf dem Sensorsignalpfad ausbreitet, der die geringere Testsignallaufzeit von den beiden Sensorsignalpfaden aufweist, verzögert wird. Das Maß für die Verzögerung ist dabei die Testsignallaufzeitdifferenz des Testsignals auf den beiden Sensorsignalpfaden.

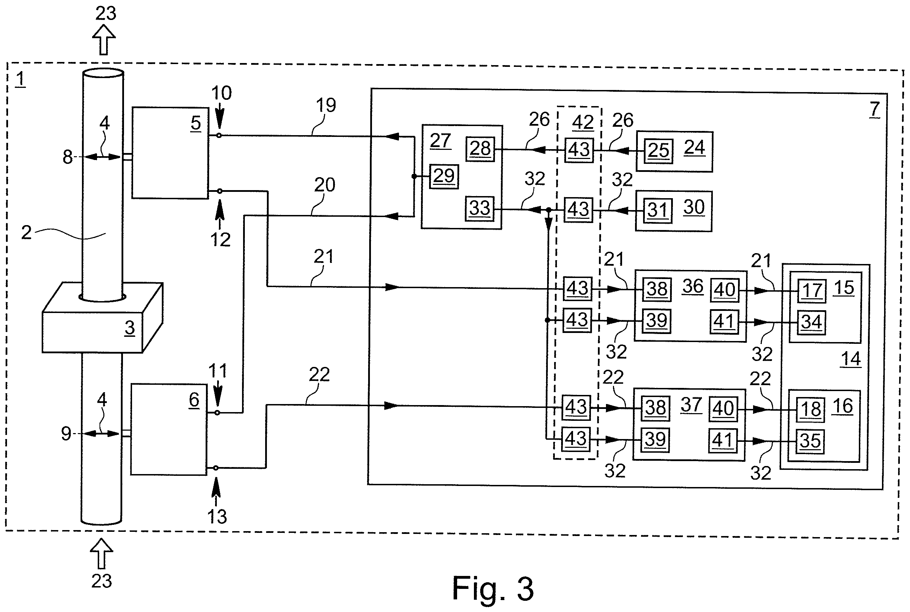

Fig. 3 zeigt eine schematische Darstellung eines zweiten Ausführungsbeispiels eines Coriolis-Massedurchflussmessgeräts 1. Das zweite Ausführungsbeispiel baut auf dem ersten Ausführungsbeispiel auf und wird deshalb im Wesentlichen nur in dem Umfang beschrieben, in welchem es von dem ersten Ausführungsbeispiel abweicht, um Wiederholungen weitestgehend zu vermeiden.

Die Auswertungseinrichtung 7 des zweiten Ausführungsbeispiels des Coriolis-Massedurchflussmessgeräts 1 weist zusätzlich zu der aus dem ersten Ausführungsbeispiel bekannten Auswertungseinrichtung 7 einen Bezugssignalgenerator 30 zur Erzeugung eines Bezugssignals mit einem Bezugssignalausgang 31 und einem Bezugssignalpfad 32 auf. Die Auswertungseinrichtung 7 wird mit einer einzigen Versorgungsspannung versorgt und der Bezugssignalgenerator 30 erzeugt ein konstantes Bezugssignal in Höhe der halben Versorgungsspannung.

Die Verbindungseinrichtung 27 weist zusätzlich zu der aus dem ersten Ausführungsbeispiel bekannten Verbindungseinrichtung 27 einen zweiten Signalverbindungseingang 33 auf. Der Bezugssignalpfad 32 ist mit dem Bezugssignalausgang 31 des Bezugssignalgenerators 30 und mit dem zweiten Signalverbindungseingang 33 der Signalverbindungseinrichtung 27 verbunden. Die Signalverbindungseinrichtung 27 ist ausgebildet, ein Summensignal durch Addition des an dem ersten Signalverbindungseingang 28 anliegenden Signals und des an dem zweiten Signalverbindungseingang 33 anliegenden Signals zu bilden und das Summensignal am Signalverbindungsausgang 29 auszugeben. Folglich sind Testsignale am Signalverbindungsausgang 29 um die halbe Versorgungsspannung verschoben. Das ermöglicht bei der gegebenen Versorgungsspannung die größten Amplituden bei den Testsignalen.

Weiterhin unterscheidet sich das zweite Ausführungsbeispiel von dem ersten Ausführungsbeispiel dadurch, dass sowohl der erste Digitalisierungskanal 15 einen zweiten Analogsignaleingang 34 aufweist, der mit dem Bezugssignalpfad 32 verbunden ist, als auch der zweite Digitalisierungskanal 16 einen zweiten Analogsignaleingang 35 aufweist, der mit dem Bezugssignalpfad 32 verbunden ist.

Darüber hinaus weist die Auswertungseinrichtung 7 nun eine erste Signalverarbeitungseinrichtung 36 und zweite Signalverarbeitungseinrichtung 37 auf. Jede der Signalverarbeitungseinrichtungen 36, 37 weist einen ersten Signalverarbeitungseingang 38, einen zweiten Signalverarbeitungseingang 39, einen ersten Signalverarbeitungsausgang 40 und einen zweiten Signalverarbeitungsausgang 41 auf.

Der erste Signalverarbeitungseingang 38 und der erste Signalverarbeitungsausgang 40 der ersten Signalverarbeitungseinrichtung 36 sind im ersten Eingangssignalpfad 21 angeordnet. Der zweite Signalverarbeitungseingang 39 und der zweite Signalverarbeitungsausgang 41 der ersten Signalverarbeitungseinrichtung 36 sind in dem Zweig des Bezugspfads 32 angeordnet, der mit dem zweiten Analogsignaleingang 34 des ersten Digitalisierungskanals 15 verbunden ist. Entsprechend sind der erste Signalverarbeitungseingang 38 und der erste Signalverarbeitungsausgang 40 der zweiten Signalverarbeitungseinrichtung 37 im zweiten Eingangssignalpfad 22 angeordnet. Und ebenfalls entsprechend sind der zweite Signalverarbeitungseingang 39 und der zweite Signalverarbeitungsausgang 41 in dem Zweig des Bezugspfads 32 angeordnet, der mit dem zweiten Analogsignaleingang 35 des zweiten Digitalisierungskanals 16 verbunden ist.

Jede der Signalverarbeitungseinrichtungen 36, 37 ist ausgebildet, ein Differenzsignal durch Subtraktion des an dem zweiten Signalverarbeitungseingang 39 anliegenden Signals von dem am ersten Signalverarbeitungseingang 38 anliegenden Signal zu bilden, das Differenzsignal zu verstärken und das Differenzsignal am jeweils ersten Signalverarbeitungsausgang 40 auszugeben. Darüber hinaus sind die Signalverarbeitungseinrichtungen 36, 37 ausgebildet, das am zweiten Signalverarbeitungseingang 39 anliegende Signal zu verstärken und das verstärkte Signal am zweiten Signalverarbeitungsausgang 41 auszugeben. Folglich liegt zum einen am jeweils ersten Signalverarbeitungsausgang 40 ein um die halbe Versorgungsspannung bereinigtes Sensorsignal und/oder Testsignal an. Zum anderen liegt am jeweils zweiten Signalverarbeitungsausgang 41 die halbe Versorgungsspannung an. Das bewirkt, dass der zulässige Eingangsspannungsbereich der ersten Analogsignaleingänge 17, 18 und der zweiten Analogsignaleingänge 34, 35 optimal ausgenutzt und eine Reduktion der Auflösung der Digitalisierungseinrichtung 14 vermieden wird.

Das zweite Ausführungsbeispiel des Coriolis-Massedurchflussmessgeräts 1 stellt beim Betrieb in zündfähigen Atmosphären keine wirksame Zündquelle dar. Das wird durch eine in der Steuerungsvorrichtung 7 vorgesehene Explosionsschutzvorrichtung 42 gewährleistet. Die Explosionsschutzvorrichtung 42 weist in dem Testsignalpfad 26, in dem Bezugssignalpfad 32, dem ersten Eingangssignalpfad 21, dem Zweig des Bezugssignalpfads 32, der mit dem zweiten Analogsignaleingang 34 des ersten Digitalisierungskanals 15 verbunden ist, dem zweiten Eingangssignalpfad 22 und dem Zweig des Bezugssignalpfads 32, der mit dem zweiten Analogsignaleingang 35 des zweiten Digitalisierungskanals 16 verbunden ist, jeweils ein Explosionsschutzelement 43 auf. Die Explosionsschutzelemente 43 sind gemäß den jeweiligen Anforderungen an die Explosionsschutzklasse ausgebildet. Zum Beispiel begrenzen die Explosionsschutzelemente Strom und Spannung, so dass Mindestzündenergie und Zündtemperatur einer explosiven Atmosphäre nicht erreicht werden. Für gewöhnlich sind die Anforderungen an Explosionsschutzklassen in Normen bestimmt. Die einzelnen Explosionsschutzelemente 43 können auch unterschiedlichen Explosionsschutzklassen entsprechen. Alternativ zu der Explosionsschutzvorrichtung 42 kann die Auswertungseinrichtung 7 auch intrinsisch sicher ausgebildet sein.

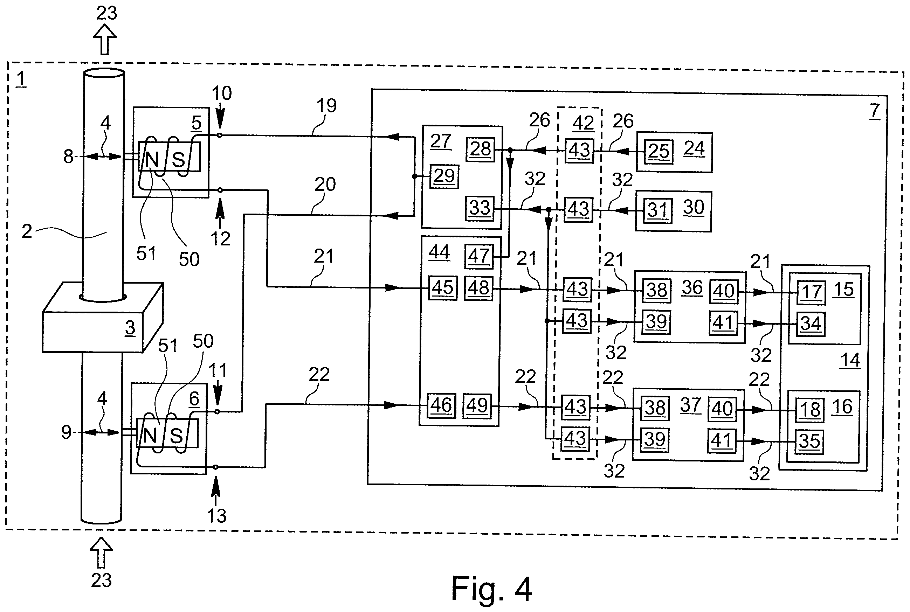

Fig. 4 zeigt eine schematische Darstellung eines dritten Ausführungsbeispiels eines Coriolis-Massedurchflussmessgeräts 1. Das dritte Ausführungsbeispiel baut auf dem zweiten Ausführungsbeispiel auf und wird deshalb im Wesentlichen nur in dem Umfang beschrieben, in welchem es von dem zweiten Ausführungsbeispiel abweicht, um Wiederholungen weitestgehend zu vermeiden.

Die Auswertungseinrichtung 7 des dritten Ausführungsbeispiels des Coriolis-Massedurchflussmessgeräts 1 weist zusätzlich zu der aus dem zweiten Ausführungsbeispiel bekannten Auswertungseinrichtung 7 einen Multiplexer 44 mit einem ersten Multiplexereingang 45, einem zweiten Multiplexereingang 46 und einem dritten Multiplexereingang 47 und mit einem ersten Multiplexerausgang 48 und einem zweiten Multiplexerausgang 49 auf.

Der erste Multiplexereingang 45 und der erste Multiplexerausgang 48 sind mit dem ersten Eingangssignalpfad 21 verbunden und der erste Eingangssignalpfad 21 ist durch den Multiplexer 44 aufgetrennt. Entsprechend sind der zweite Multiplexereingang 46 und der zweite Multiplexerausgang 49 mit dem zweiten Eingangssignalpfad 22 verbunden und ist der zweite Eingangssignalpfad 22 ebenfalls durch den Multiplexer 44 aufgetrennt. Der dritte Multiplexereingang 47 ist mit dem Testsignalpfad 26 verbunden und der Multiplexer 44 ist ausgebildet, die Multiplexereingänge 45, 46, 47 mit mindestens einem der Multiplexerausgänge 48, 49 zu verbinden.

Der Multiplexer 44 vertauscht zum Beispiel den ersten Eingangssignalpfad 21 mit dem zweiten Eingangssignalpfad 22, so dass Signallaufzeitdifferenzen in dem ersten Eingangssignalpfad 21 und dem zweiten Eingangssignalpad 22 zwischen dem Multiplexer 44 und der Digitalisierungseinrichtung 14 erkannt werden. Oder der Multiplexer 44 legt zu Diagnosezwecken das Bezugssignal auf den ersten Eingangssignalpfad 21 und den zweiten Eingangssignalpfad 22.

In diesem Ausführungsbeispiel sind die Schwingungssensoren 5, 6 Induktionssensoren. Jeder der Induktionssensoren weist eine Spule 50 und einen Magneten 51 auf. Der Magnet 51 des ersten Schwingungssensors 5 ist an der ersten Messrohrstelle 8 an dem Messrohr 2 angeordnet, so dass die Schwingung 4 des Messrohrs 2 an der Messrohrstelle 8 auf den Magneten 51 übertragen wird. Entsprechend ist der Magnet 51 des zweiten Schwingungssensors 6 an der zweiten Messrohrstelle 9 an dem Messrohr 2 angeordnet, so dass die Schwingung 4 des Messrohrs 2 an der Messrohrstelle 9 auf den Magneten 51 übertragen wird. Die Spulen 50 sind ruhend in Bezug auf die Schwingung 4 des Messrohrs 2 angeordnet, so dass sich die Magneten 51 relativ zu den Spulen 50 aufgrund der Schwingung 4 bewegen. Die Relativbewegung zwischen den Spulen 50 und den Magneten 51 erzeugt die Sensorsignale.

### Bezugszeichen:

- 1: Coriolis-Massedurchflussmessgerät
- 2: Messrohr
- 3: Schwingungserregungseinrichtung
- 4: Schwingung
- 5: Erster Schwingungssensor
- 6: Zweiter Schwingungssensor
- 7: Auswertungseinrichtung
- 8: Erste Messrohrstelle
- 9: Zweite Messrohrstelle
- 10: Erster Sensoranschluss des ersten Schwingungssensors
- 11: Erster Sensoranschluss des zweiten Schwingungssensors
- 12: Zweiter Sensoranschluss des ersten Schwingungssensors
- 13: Zweiter Sensoranschluss des zweiten Schwingungssensors
- 14: Digitalisierungseinrichtung
- 15: Erster Digitalisierungskanal
- 16: Zweiter Digitalisierungskanal
- 17: Erster Analogsignaleingang des ersten Digitalisierungskanals
- 18: Erster Analogsignaleingang des zweiten Digitalisierungskanals
- 19: Erster Ausgangssignalpfad
- 20: Zweiter Ausgangssignalpfad
- 21: Erster Eingangssignalpfad
- 22: Zweiter Eingangssignalpfad
- 23: Medium
- 24: Testsignalgenerator
- 25: Testsignalausgang
- 26: Testsignalpfad
- 27: Signalverbindungseinrichtung
- 28: Erster Signalverbindungseingang
- 29: Signalverbindungsausgang
- 30: Bezugssignalgenerator
- 31: Bezugssignalausgang
- 32: Bezugssignalpfad
- 33: Zweiter Signalverbindungseingang
- 34: Zweiter Analogsignaleingang des ersten Digitalisierungskanals
- 35: Zweiter Analogsignaleingang des zweiten Digitalisierungskanals
- 36: Erste Signalverarbeitungseinrichtung
- 37: Zweite Signalverarbeitungseinrichtung
- 38: Erster Signalverarbeitungseingang
- 39: Zweiter Signalverarbeitungseingang
- 40: Erster Signalverarbeitungsausgang
- 41: Zweiter Signalverarbeitungsausgang
- 42: Explosionsschutzeinrichtung
- 43: Explosionsschutzelement
- 44: Multiplexer
- 45: Erster Multiplexereingang
- 46: Zweiter Multiplexereingang
- 47: Dritter Multiplexereingang
- 48: Erster Multiplexerausgang
- 49: Zweiter Multiplexerausgang
- 50: Spule
- 51: Magnet
- 52: Erster Verfahrensschritt
- 53: Zweiter Verfahrensschritt
- 54: Dritter Verfahrensschritt
- 55: Vierte Verfahrensschritt
- 56: Fünfter Verfahrensschritt

## Patentansprüche

1. Verfahren zum Betreiben eines Coriolis-Massedurchflussmessgeräts (1) mit mindestens einem Messrohr (2), einer Schwingungserregungseinrichtung (3) zur Erregung einer Schwingung (4) des Messrohrs (2), mindestens einem ersten Schwingungssensor (5) und einem zweiten Schwingungssensor (6) und mindestens einem ersten Sensorsignalpfad und einem zweiten Sensorsignalpfad,
wobei mindestens ein erstes Testsignal mit mindestens einer ersten Testsignalfrequenz erzeugt wird,
wobei das mindestens erste Testsignal mindestens in den ersten Sensorsignalpfad und in den zweiten Sensorsignalpfad eingespeist wird,
wobei das mindestens erste Testsignal von dem ersten Sensorsignalpfad über den ersten Schwingungssensor (5) und von dem zweiten Sensorsignalpfad über den zweiten Schwingungssensor (6) geführt wird,
wobei die Testsignallaufzeitdifferenz des mindestens ersten Testsignals mindestens zwischen dem ersten Sensorsignalpfad und dem zweiten Sensorsignalpfad bestimmt wird,
wobei mit der Testsignallaufzeitdifferenz die Sensorsignallaufzeitdifferenz zwischen dem ersten Sensorsignal und dem zweiten Sensorsignal kompensiert wird und
wobei mindestens das erste Testsignal mit einem Frequenzspektrum erzeugt wird, das frei von der Frequenz der Schwingung des Messrohrs ist,
**dadurch gekennzeichnet,**
**dass** mindestens das erste Testsignal mit einem Frequenzspektrum erzeugt wird, das unterhalb der Frequenz der Schwingung des Messrohrs liegt und mindestens ein zweites Testsignal mit einem Frequenzspektrum erzeugt wird, das oberhalb der Frequenz der Schwingung des Messrohrs liegt.

2. Verfahren nach Anspruch 1, **dadurch gekennzeichnet, dass** bei der Kompensation der Sensorsignallaufzeitdifferenz die Frequenzabhängigkeit des Übertragungsverhaltens mindestens des ersten Sensorsignalpfads berücksichtigt wird.

3. Verfahren nach Anspruch 1 oder 2, **dadurch gekennzeichnet, dass** mindestens aus der Testsignallaufzeitdifferenz des ersten Testsignals und aus der Testsignallaufzeitdifferenz des zweiten Testsignals die Sensorsignallaufzeitdifferenz durch Interpolation bestimmt wird.

4. Verfahren nach einem der Ansprüche 1 bis 3, **dadurch gekennzeichnet, dass** mindestens aus der Testsignallaufzeitdifferenz des ersten Testsignals und aus der Testsignallaufzeitdifferenz des zweiten Testsignals die Übertragungsfunktion des ersten Signalpfads bestimmt wird.

## Claims

1. Method for operating a Coriolis mass flowmeter (1) with at least one measuring tube (2), an oscillation excitation device (3) for exciting an oscillation (4) of the measuring tube (2), at least one first oscillation sensor (5) and one second oscillation sensor (6) and at least one first sensor signal path and one second sensor signal path,
wherein at least a first test signal with at least a first test signal frequency is generated,
wherein the at least first test signal is fed at least into the first sensor signal path and into the second sensor signal path,
wherein the at least first test signal is led from the first sensor signal path via the first vibration sensor (5) and from the second sensor signal path via the second vibration sensor (6),
wherein the test signal propagation time difference of the at least first test signal is determined at least between the first sensor signal path and the second sensor signal path,
wherein the test signal propagation time difference is used to compensate for the sensor signal propagation time difference between the first sensor signal and the second sensor signal, and
wherein at least the first test signal is generated with a frequency spectrum which is free of the frequency of the oscillation of the measuring tube, **characterized in**
**that** at least the first test signal is generated with a frequency spectrum which is below the frequency of the oscillation of the measuring tube and at least a second test signal is generated with a frequency spectrum which is above the frequency of the oscillation of the measuring tube.

2. Method according to claim 1, **characterized in that** the frequency dependence of the transmission behavior of at least the first sensor signal path is taken into account when compensating for the sensor signal propagation time difference.

3. Method according to claim 1 or 2, **characterized in that** the sensor signal transit time difference is determined by interpolation at least from the test signal transit time difference of the first test signal and from the test signal transit time difference of the second test signal.

4. Method according to any one of claims 1 to 3, **characterized in that** the transfer function of the first signal path is determined at least from the test signal propagation time difference of the first test signal and from the test signal propagation time difference of the second test signal.

## Revendications

1. Procédé de fonctionnement d'un débitmètre massique Coriolis (1) comprenant au moins un tube de mesure (2), un dispositif de génération de vibration (3) destiné à générer une vibration (4) du tube de mesure (2), au moins un premier un capteur de vibration (5) et un deuxième capteur de vibration (6) et au moins un premier chemin de signal de capteur et un deuxième chemin de signal de capteur,
au moins un premier signal de test étant généré à au moins une première fréquence de signal de test,
l'au moins un premier signal de test étant injecté au moins dans le premier chemin de signal de capteur et dans le deuxième chemin de signal de capteur,
l'au moins un premier signal de test étant transmis par le premier chemin de signal de capteur par le biais du premier capteur de vibration (5) et par le deuxième chemin de signal de capteur par le biais du deuxième capteur de vibration (6),
la différence de temps de propagation de signal de test de l'au moins un premier signal de test étant déterminée au moins entre le premier chemin de signal de capteur et le deuxième chemin de signal de capteur, la différence de temps de propagation de signal de capteur entre le premier signal de capteur et le deuxième signal de capteur étant compensée par la différence de temps de propagation de signal de test et au moins le premier signal de test étant généré avec un spectre de fréquences qui est indépendant de la fréquence de la vibration du tube de mesure,
**caractérisé en ce que**
au moins le premier signal de test est généré avec un spectre de fréquences qui est inférieur à la fréquence de la vibration du tube de mesure et au moins un deuxième signal de test est généré avec un spectre de fréquences qui est supérieur à la fréquence de la vibration du tube de mesure.

2. Procédé selon la revendication 1, **caractérisé en ce que** la dépendance en fréquence du comportement de transmission d'au moins le premier chemin de signal de capteur est prise en compte lors de la compensation de la différence de temps de propagation de signal de capteur.

3. Procédé selon la revendication 1 ou 2, **caractérisé en ce que** la différence de temps de propagation de signal de capteur est déterminée par interpolation au moins à partir de la différence de temps de propagation de signal de test du premier signal de test et à partir de la différence de temps de propagation du signal de test du deuxième signal de test.

4. Procédé selon l'une des revendications 1 à 3, **caractérisé en ce que** la fonction de transfert du premier chemin de signal est déterminée au moins à partir de la différence de temps de propagation de signal de test du premier signal de test et à partir de la différence de temps de propagation de signal de test du deuxième signal de test.
